# EUROPEAN PATENT APPLICATION

(11) **EP 3 690 604 A1**
(43) Date of publication of application: **05.08.2020**
(21) Application number: 17905916.7
(22) Date of filing: 30.11.2017
(51) Int. Cl.: G06F 3/01, H04B 5/00

(54) **DISPLAY CONTROL METHOD AND SYSTEM, AND VIRTUAL REALITY DEVICE**

(30) Priority: 27.09.2017 CN 201710890209
(71) Applicant: Goertek Technology Co., Ltd., Qingdao, Shandong 266104 (CN)
(72) Inventor: QIN, Wendong, Qingdao Shandong 266104 (CN)
(74) Representative: Renaudo, Adrien Hanouar
(86) International application number: PCT/CN2017/113969
(87) International publication number: WO 2019/061798

(57) **Abstract**

The embodiment of the present application provides a display control method and system, and a virtual reality device. The method includes: if a near field communication (NFC) tag is detected, acquiring a control message stored in the NFC tag in advance, where the control message includes a control type and a display object; and performing corresponding operation on the display object according to the control type. By implementing the embodiment of the solution, the content displayed in a virtual reality interface may be conveniently controlled.

## Description

### Cross-Reference to Related Applications

The present application claims benefit of Chinese Patent Application No. 2017108902093, filed on September 27, 2017 and entitled "Display Control Method and System, and Virtual Reality Device", the contents of which are hereby incorporated by reference in its entirety.

### Technical Field

The present application relates to the technical field of virtual reality, and in particular to a display control method and system, and a virtual reality device.

### Background

With the advent of the age of data information, virtual reality technology has been widely used in various fields. The experiencer views the corresponding virtual reality scenes in various fields through virtual reality technology. For example, in the field of real estate sale, experience the type of real estate; for another example, experience the teaching content in the field of teaching, and so on. During the experience, the displayed content should be controlled to perform the corresponding experience, such as selecting the displayed experience scene and so.

Based on different design ideas, the operations corresponding to the control of the display content vary widely. In most cases, the experiencer does not know what kind of operation needs to be performed to realize the control. If the operation is improper, the device will be useless and power consumption will be increased.

### Summary

Various aspects of the present application provide a display control method and system, and a virtual reality device, to conveniently control the content displayed in a virtual reality interface. In the first aspect, the embodiment of the present application provides a display control method, including:
if a near field communication ("NFC" for short) tag is detected, acquiring a control message stored in the NFC tag in advance, where the control message includes a control type and a display object; and
performing corresponding operation on the display object according to the control type.

In the second aspect, the embodiment of the present application provides a virtual reality device, where the virtual reality device includes:
a processor, a memory and an NFC reader;
and wherein the processor is connected to the memory and the NFC reader respectively;
the NFC reader is configured to read a control message stored in an NFC tag in advance, and send the control message to the processor; and
the memory is configured to store one or more computer instructions, where the one or more computer instructions are executed by the processor to implement the display control method provided by the present application.

In the third aspect, the embodiment of the present application provides a display control system including: an NFC tag and a virtual reality device provided by the embodiment of the present application.

According to the display control method and system and the virtual reality device provided by the embodiment of the present application, a control message is recorded by an NFC tag, and when a virtual reality device of an experiencer needs to be controlled to display a certain content, a controller puts the corresponding NFC tag close to the VR device, so the VR device can read the control message in the NFC tag and then make corresponding response; therefore, the content displayed in a virtual reality interface can be conveniently controlled when the experiencer does not know how to operate it.

### Brief Description of the Drawings

The drawings illustrated herein are intended to provide a further understanding of the present application, which constitutes a part of the present application, where schematic embodiments of the present application and illustrations thereof serve to explain the present application, and do not constitute improper limitation to the present application. In drawings:
Fig. 1 is a flowchart of a display control method provided by an embodiment of the present application;
Fig. 2 is another flowchart of a display control method provided by an embodiment of the present application;
Fig. 3 is yet another flowchart of a display control method provided by an embodiment of the present application;
Fig. 4 is a further flowchart of a display control method provided by an embodiment of the present application;
Fig. 5 is a structural schematic diagram of a display control apparatus provided by an embodiment of the present application; and
Fig. 6 is a structural schematic diagram of a virtual reality device provided by an embodiment of the present application.

### Description of Embodiments

For the purpose of making objectives, technical schemes and advantages of the present application more clear, clear and complete description will be made to the technical schemes of the present application in conjunction with specific embodiments and corresponding drawings. Obviously, the described embodiments are merely a part of the embodiments of the present application and not all the embodiments. Based on the embodiments of the present application, all other embodiments obtained by those ordinarily skilled in the art without paying creative work fall within the protection scope of the present application.

A display control method provided by the embodiment of the present application is applied to a virtual reality device. The virtual reality device may include a virtual reality product such as monocular glasses and binocular glasses. Specifically, the display control method provided by the embodiment of the present application is applied to a display control apparatus. The apparatus may be application software specified for display control, or may be a function plug-in of a relevant program such as an operating system and a control application program.

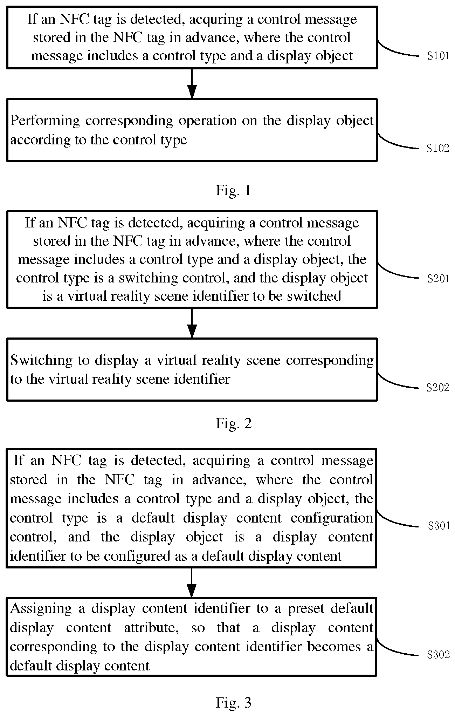

As shown in Fig. 1, the display control method provided by the embodiment of the present application includes the steps as follows.

S101: If an NFC tag is detected, acquiring a control message stored in the NFC tag in advance, where the control message includes a control type and a display object.

NFC is a technology for realizing short-range wireless communication, and two parties can make wireless communication within a preset range. In the embodiment of the present application, the content to be transmitted is written to one of the two parties in advance, and further, when the two parties are within a certain range, the other party may read the content to be transmitted, thereby realizing communication.

The communication parties in the embodiment of the present application may be an NFC tag and a virtual reality device to achieve the purpose of controlling the content displayed in the virtual reality device through the NFC tag. To achieve the purpose, the control message is written into the NFC tag in advance, and if the NFC tag is close to the virtual reality device, the virtual reality device can detect the NFC tag, and then read the foregoing content to complete the communication of the NFC tag.

Specifically, the virtual reality device reads the control message written in advance into the NFC tag, and the virtual reality device may further perform display control according to the control message. The control message includes, but is not limited to, a control type and a display object. The virtual reality device may know what kind of operation needs to be performed according to the control type. The control type may include display brightness adjusting, display content switching, default parameter setting, and the like. For example, if the control type is brightness adjusting, the virtual reality device knows that the operation of adjusting the display brightness should be performed upon receipt of the control type indicative of display brightness adjusting.

In correspondence to the control type, the display object may be a brightness value to be displayed, a content to be displayed, a target value of the set parameter, and the like. For example, if the virtual reality device knows that the control type is display brightness adjusting and knows that the display brightness value is 90%, the virtual reality device adjusts the display brightness value to 90%.

S102: Performing corresponding operation on the display object according to the control type. After learning the type of operation according to the control type and learning the display object to be operated, the display object may be correspondingly operated according to the control type. For example, the display brightness value is adjusted to 90%.

In the embodiment of the present application, a control message written in advance into an NFC tag placed by a virtual reality device controller within a close range is read, and a display content is controlled according to the control message. The content displayed in a virtual reality interface may be conveniently controlled when an experiencer of a virtual reality scene does not know how to perform the operation.

In practical application, the user may need to switch the display scenes of the virtual reality device. For example, during experiencing of types of the real estate in a sales office, when an experiencer wants to view type B after viewing type A, a virtual scene corresponding to type A is required to be switched into a virtual scene corresponding to type B. For another example, during experiencing of various entertainment items of an amusement park, when an experience wants to move on to the second item after experiencing the first item, a virtual scene corresponding to the first item is required to be switched into a virtual scene corresponding to the second item. In response to the foregoing requirements, in the embodiment of the present application, the control type is a switching control, and the display object is a virtual reality scene identifier to be switched. As shown in Fig. 2, the embodiment of the present application includes the steps as follows.

S201: If an NFC tag is detected, acquiring a control message stored in the NFC tag in advance, where the control message includes a control type and a display object.

In the embodiment of the present application, the control type is a switching control. Alternatively, the control type may be embodied as guide. The display object is a virtual reality scene identifier to be switched, and the display object may be embodied as com.android.vr.test:A, that is, Scene A in an application program com.android.vr.test. Then, the control message is guide:com.android.vr.test:A, the message at an application level means: switching to Scene A in an application named com.android.vr.test.

S202: Switching to display a virtual reality scene corresponding to the virtual reality scene identifier.

Alternatively, the virtual reality scene identifier may be the name of a virtual reality scene.

In actual use, if an experiencer wants to view a type B after viewing a type A of a real estate, a controller puts an NFC tag which corresponds to the type B and has a written message "switching to a virtual scene corresponding to type B" close to the virtual reality device, and the virtual reality device may read the foregoing message to realize a control operation corresponding to the message, that is, switching the scene to the type B.

In actual situations, the user may also need to control a default display content, such as setting a boot screen and setting a default scene after booting, etc. Therefore, in another alternative embodiment, the control type is a default display content configuration control, and the display object is a display content identifier to be configured as a default display content. As shown in Fig. 3, the embodiment of the present application includes the steps as follows.

S301: If an NFC tag is detected, acquiring a control message stored in the NFC tag in advance, where the control message includes a control type and a display object.

In the embodiment of the present application, the control type is a default display content configuration control, and the display object is a display content identifier to be configured as a default display content. Further, the display content identifier may be the name of a display content. For example, if configuration control of a default display scene is required to be performed, the control type may be embodied as default_guide, and the display object may be embodied as com.android.vr.test:A. Then, the control message is default_guide:com.android.vr.test:A. The message at an application level means that Scene A in an application named com.android.vr.test is set as a default scene.

For another example, if configuration control of a default display application program is required to be performed, the control type may be embodied as default_app, and the display object may be embodied as com.android.vr.test. Then, the control message is default_app:com.android.vr.test. The message at an application level means that an application program in an application named com.android.vr.test is set as a default program.

S302: Assigning a display content identifier to a preset default display content attribute, so that a display content corresponding to the display content identifier becomes a default display content. Alternatively, the step of assigning the display content identifier to the preset default display content attribute may be implemented in the following manners: determining a target attribute according to a type of the default display content configuration control, where the target attribute is one of a plurality of preset default display content attributes; and if the display content identifier corresponds to the target attribute, assigning the display content identifier to the target attribute. For example, if the default display content configuration control is default_guide, it may be determined that the default scene attribute needs to be assigned; and if the default display content configuration control is default_app, it may be determined that the default application program attribute needs to be assigned. In real application, the display content identifier may not correspond to the determined target attribute because of the incorrect setting of the control message. For example, when the type of the default display content configuration control is a default display scene configuration control, the display content identifier is an application program identifier. For another example, when the type of the default display content configuration control is a default display application program configuration control, the display content identifier is an application scene identifier. Therefore, it is necessary to detect whether the display content identifier corresponds to the target attribute. If so, the display content identifier is assigned to the target attribute.

It should be noted that the type of the default display content configuration control includes, but is not limited to, a default display scene configuration control and a default display application program configuration control.

It can be understood that the control message received in the foregoing embodiment is written into the NFC tag in advance. Alternatively, in an embodiment, the control message may be written into the NFC tag in the following manners: acquiring the control message input by a user in a tag writing interface; and writing the control message into the NFC tag. Alternatively, the input mode may be keyboard input, voice input and the like. After the input control message is acquired, if the NFC tag is detected and a write instruction sent by the user is received, the control message is written into the NFC tag. In actual situations, when a user inputs a control message, a manual mistake may occur, and result in that the input control message is not a control message desired to be input. Therefore, in an alternative embodiment of the present application, before the control message is written into the NFC tag, it is necessary to wait for a write instruction sent by the user, if the write instruction is received, the control message is written into the NFC tag, thereby ensuring the accuracy of the written control message.

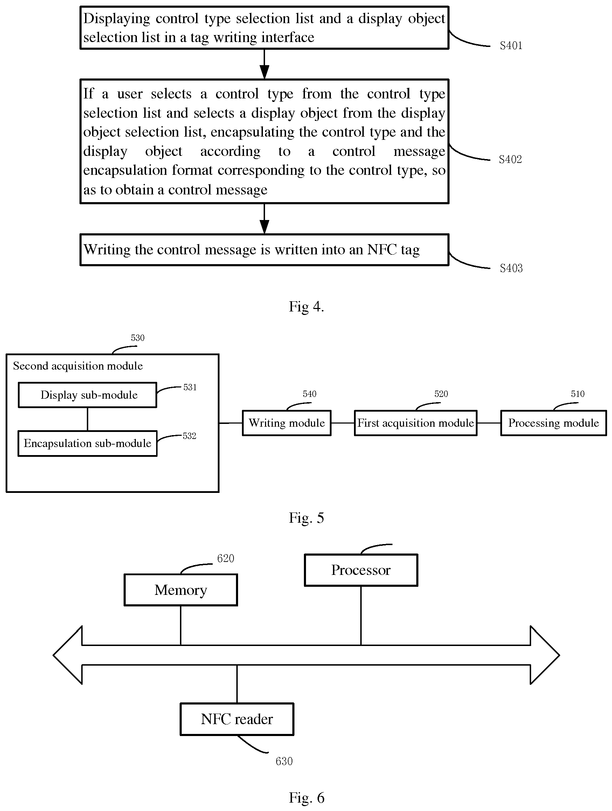

Specifically, as shown in Fig. 4, an alternative embodiment of the present application includes the steps as follows.

S401: Displaying a control type selection list and a display object selection list in the tag writing interface.

Specifically, the control type selection list includes a plurality of control types. A control type may be first selected from the control type selection list, a display object controllable by the type is then determined according to the control type, and the display object selection list is further displayed for user selection. For example, if the control type selected by the user is the default display scene configuration control, all available scenes are displayed in the display object selection list; and if the control type selected by the user is the default display application program configuration control, all available application programs are displayed in the display object selection list.

S402: If a user selects a control type from the control type selection list and selects a display object from the display object selection list, encapsulating the control type and the display object according to a control message encapsulation format corresponding to the control type, so as to obtain a control message.

It can be understood that when the control type and the display object are selected, the above two are only two characters that are displayed on a display and appended together, and cannot be recognized by the virtual reality device. Therefore, it is necessary to convert, according to a specific control message encapsulation format, the foregoing control type and display object into a machine language recognizable by the virtual reality device, so that the virtual reality device recognizes the corresponding content and then performs conversion of the display content.

S403:Writing the control message into an NFC tag.

In the present embodiment, the user writes the control message into the NFC tag in advance by selection, thereby completing NFC. By selecting the input mode in the list instead of inputting characters one by one through a keyboard, the present embodiment also improves the input accuracy of the control message on the basis of conveniently controlling the display content.

In correspondence to the foregoing method embodiment, as shown in Fig. 5, the embodiment of the present application also provides a display control apparatus, including:
a first acquisition module 510, configured to acquire, if an NFC tag is detected, a control message stored in the NFC tag in advance, where the control message includes a control type and a display object; and
a processing module 520, configured to perform corresponding operation on the display object according to the control type.

In the embodiment of the present application, a control message written in advance into an NFC tag placed by a virtual reality device controller within a close range is read, and a display content is controlled according to the control message. The content displayed in a virtual reality interface may also be conveniently controlled when an experiencer of a virtual reality scene does not know how to perform the operation.

Alternatively, the control type is a switching control, and the display object is a virtual reality scene identifier to be switched.

The processing module 520 is specifically configured to:
switch to display a virtual reality scene corresponding to the virtual reality scene identifier.

Alternatively, the control type is a default display content configuration control, and the display object is a display content identifier to be configured as a default display content.

The processing module 520 is specifically configured to:
assign the display content identifier to a preset default display content attribute, so that a display content corresponding to the display content identifier becomes a default display content.

Alternatively, the apparatus further includes: a second acquisition module 530 and a writing module 540.

The second acquisition module 530 is configured to acquire the control message input by a user in a tag writing interface.

The writing module 540 is configured to write the control message into the NFC tag. Alternatively, the second acquisition module 530 includes: a display sub-module 531 and an encapsulation sub- module 532.

The display sub-module 531 is configured to display a control type selection list and a display object selection list in the tag writing interface.

The encapsulation sub-module 532 is configured to encapsulate, if the user selects the control type from the control type selection list and selects the display object from the display object selection list, the control type and the display object according to a control message encapsulation format corresponding to the control type, so as to obtain the control message.

The embodiment of the present application also provides a display control system, including: an NFC tag and a virtual reality device provided by the embodiment of the present application.

It should be noted that simple description is made to the apparatus/system embodiment due to its basic similarity to the method embodiment; for relevant parts, please refer to the description of the method embodiment.

As shown in Fig. 6, the embodiment of the present application also provides a virtual reality device. The device includes: a processor 610, a memory 620, and an NFC reader 630.

The processor 610 is connected to the memory 620 and the NFC reader 630 respectively.

The NFC reader 630 is configured to read a control message stored in an NFC tag in advance, and send the control message to the processor 610.

The memory 620 is configured to store one or more computer instructions, wherein the one or more computer instructions are executed by the processor 610 to implement the display control method provided by the embodiment of the present application.

Those skilled in the art should understand that the embodiments of the present application may be provided as a method, a system or a computer program product. Thus, forms of complete hardware embodiments, complete software embodiments or embodiments integrating software and hardware may be adopted in the present application. Moreover, the form of a computer program product implemented on one or more computer available storage media (including, but not limited to, a disk memory, a CD-ROM, an optical memory and the like) containing computer available program codes may be adopted in the present application.

The present application is described with reference to flowcharts and/or block diagrams of the method, the device (system) and the computer program product according to the embodiments of the present application. It will be understood that each flow and/or block in the flowcharts and/or block diagrams and a combination of the flows and/or blocks in the flowcharts and/or block diagrams may be implemented by computer program instructions. These computer program instructions may be provided for a processor of a general-purpose computer, a dedicated computer, an embedded processor or other programmable data processing devices to generate a machine, so that an apparatus for achieving functions designated in one or more flows of the flowcharts and/or one or more blocks of the block diagrams is generated via instructions executed by the processor of the computers or the other programmable data processing devices.

These computer program instructions may also be stored in a computer-readable memory capable of guiding the computers or the other programmable data processing devices to work in a specific manner, so that a manufactured product including an instruction apparatus is generated via the instructions stored in the computer-readable memory, and the instruction apparatus achieves the functions designated in one or more flows of the flowcharts and/or one or more blocks of the block diagrams.

These computer program instructions, which can also be loaded onto the computers or the other programmable data processing devices, enable the computers to implement a series of operation steps on the computers or the other programmable devices; therefore, the instructions executed on the computers or the other programmable devices provide a step of achieving the functions designated in one or more flows of the flowcharts and/or one or more blocks of the block diagrams.

In a typical configuration, a computing device includes one or more processors (CPUs), an input/output interface, a network interface, and a memory.

The memory may include a non-permanent memory, a random access memory (RAM), and/or a non-volatile memory in a computer-readable medium, such as a read-only memory (ROM) or a flash RAM. The memory is an example of a computer-readable medium.

The computer-readable medium includes permanent and non-permanent, mobile and non-mobile media, which may implement information storage by any method or technology. The information may be a computer-readable instruction, a data structure, a program module, or other data. Examples of computer storage media include, but are not limited to, a phase change RAM (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical memories, a magnetic tape cartridge, a magnetic tape storage device or other magnetic storage devices or any other non-transmission media, which may be used to store information accessible by a computing device. As defined herein, the computer-readable medium does not include transitory computer-readable media such as modulated data signals and carrier waves.

It should also be noted that the terms "including", "containing" or any other variations thereof are intended to encompass a non-exclusive inclusion, such that a process, method, item or device including a series of elements includes not only those elements but also other elements not explicitly listed, or elements that are inherent to such process, method, item or device. In the absence of more restrictions, an element defined by the phrase "including one..." does not exclude the existence of additional identical elements in the process, method, item or device that includes the element.

Those skilled in the art should understand that the embodiments of the present application may be provided as a method, a system or a computer program product. Thus, forms of complete hardware embodiments, complete software embodiments or embodiments integrating software and hardware may be adopted in the present application. Moreover, the form of a computer program product implemented on one or more computer available storage media (including, but not limited to, a disk memory, a CD-ROM, an optical memory and the like) containing computer available program codes may be adopted in the present application.

The above is only the embodiments of the present application, and not intended to limit the present application. As will occur to those skilled in the art, the present application is susceptible to various modifications and changes. Any modifications, equivalent replacements, improvements and the like made within the spirit and principle of the present application shall fall within the scope of protection of the present application.

## Claims

1. A display control method, comprising:
if a near field communication (NFC) tag is detected, acquiring a control message stored in the NFC tag in advance, wherein the control message comprises a control type and a display object; and
performing corresponding operation on the display object according to the control type.

2. The method according to claim 1, wherein the control type is a switching control, and the display object is a virtual reality scene identifier to be switched;
and wherein the performing corresponding operation on the display object according to the control type comprises:
switching to display a virtual reality scene corresponding to the virtual reality scene identifier.

3. The method according to claim 1 or 2, wherein the control type is a default display content configuration control, and the display object is a display content identifier to be configured as a default display content;
and wherein the performing corresponding operation on the display object according to the control type comprises:
assigning the display content identifier to a preset default display content attribute, so that a display content corresponding to the display content identifier becomes a default display content.

4. The method according to claim 3, wherein the assigning the display content identifier to the preset default display content attribute comprises:
determining a target attribute according to a type of the default display content configuration control, wherein the target attribute is one of a plurality of preset default display content attributes; and
if the display content identifier corresponds to the target attribute, assigning the display content identifier to the target attribute.

5. The method according to claim 4, wherein the type of the preset default display content attribute comprises: a default display scene configuration control and a default display application program configuration control.

6. The method according to any one of claims 1 to 5, wherein further comprises:
acquiring the control message input by a user in a tag writing interface; and
writing the control message into the NFC tag.

7. The method according to claim 6, wherein the acquiring the control message input by the user in the tag writing interface comprises:
displaying a control type selection list and a display object selection list in the tag writing interface; and
if the user selects the control type from the control type selection list and selects the display object from the display object selection list, encapsulating the control type and the display object according to a control message encapsulation format corresponding to the control type, so as to obtain the control message.

8. The method according to claim 6 or 7, wherein before the writing the control message into the NFC tag, further comprises:
if a write instruction is received, writing the control message into the NFC tag.

9. A virtual reality device, wherein the virtual reality device comprises:
a processor, a memory and a near field communication (NFC) reader;
and wherein the processor is connected to the memory and the NFC reader respectively;
the NFC reader is configured to read a control message stored in an NFC tag in advance, and send the control message to the processor; and
the memory is configured to store one or more computer instructions, wherein the one or more computer instructions are executed by the processor to implement the display control method of any one of claims 1 to 8.

10. A display control system, comprising: a near field communication (NFC) tag and a virtual reality device of claim 9.
